# EUROPÄISCHE PATENTSCHRIFT

(11) **EP 0 702 060 B1**
(45) Veröffentlichungstag und Bekanntmachung des Hinweises auf die Patenterteilung: **21.10.1998**
(21) Anmeldenummer: 95113848.6
(22) Anmeldetag: 04.09.1995
(51) Int. Cl.: C09B 67/04, C09B 3/66, C09D 11/00

(54) **Verfahren zur Herstellung von 4,10-Dibromanthanthron-Pigment**
Process for the preparation of 4,10-dibromoanthantrone pigment
Procédé pour la préparation du pigment 4,10-dibromoanthantrone

(30) Priorität: 16.09.1994 DE 4433041; 23.03.1995 DE 19510668
(43) Veröffentlichungstag der Anmeldung: 20.03.1996
(73) Patentinhaber: Clariant GmbH, 65929 Frankfurt am Main (DE)
(72) Erfinder: Urban, Manfred, Dl., D-65205 Wiesbaden (DE); Wilker, Gerhard, D-64546 Mörfelden-Walldorf (DE)

(56) Entgegenhaltungen:
- EP-A- 0 360 184
- EP-A- 0 504 923
- EP-A- 0 574 792

## Beschreibung

Die vorliegende Erfindung betrifft ein besonders umweltfreundliches und wirtschaftliches Verfahren zur Herstellung von 4,10-Dibromanthanthron-Pigment. Anthanthronpigmente dienen zum Pigmentieren von hochmolekularen Materialien und zeichnen sich aus durch ihre hohe Transparenz und Farbstärke in allen gängigen Lacksystemen.

Von den Anthanthronderivaten hat insbesondere das 4,10-Dibromanthanthron als Pigment große technische Bedeutung erlangt. Die Herstellung des Rohpigments ist im Fiat Final Report 1313 Vol II beschrieben. Hierbei wird 8,8'-Dicarboxy-1,1'-dinaphthyl in Schwefelsäure-Monohydrat zum Anthanthron cyclisiert und anschließend bromiert. Das so erhaltene 4,10-Dibromanthanthron wird durch Zugabe geringer Mengen Wasser als Oxoniumsulfat ausgefällt und isoliert. Durch Hydrolyse entsteht daraus das 4,10-Dibromanthanthron-Rohpigment.

Zur Überführung der grobkristallinen Rohpigmente in die Pigmentform sind verschiedene Feinverteilungsverfahren bekannt geworden:

In der DE-A-2 540 739 wird die Feinverteilung des Rohpigments durch Lösen in konzentrierten Säuren und anschließendes Ausfällen durch Eingießen in Wasser beschrieben. An die Feinverteilung schließt sich eine Behandlung mit Cetyltrimethylammoniumbromid an. Die so erhaltenen Pigmente besitzen nur mäßige Farbstärke. Außerdem fallen große Mengen verdünnter Schwefelsäure an, die wieder regeneriert werden müssen.

In der EP-A-0 075 182 wird ein Verfahren beschrieben, bei dem die Feinverteilung des Rohpigments durch Behandlung mit Polyphosphorsäure und anschließende Hydrolyse erfolgt, der sich bekannte Finishvarianten anschließen können. Die nach diesem Verfahren hergestellten Pigmente besitzen nur geringe Farbstärke. Das Verfahren ist sehr aufwendig, da die anfallenden großen Mengen verdünnter Phosphorsäure wieder aufgearbeitet werden müssen.

In der US-PS 4 705 572 wird ein Verfahren beschrieben, bei dem die Feinverteilung des Rohpigments durch Umküpung erfolgt. An die Feinverteilung schließt sich ein Lösemittelfinish an. Es werden zwar farbstarke Pigmente erhalten, aber die bei der Umküpung anfallenden Salzmengen führen zu Abwasserproblemen. Wegen der hohen Kosten für Chemikalien ist dieses Verfahren unwirtschaftlich.

Die US-PS 4 018 791 beschreibt die Reinigung des Rohpigments über das Sulfat und anschließende Mahlung in einem flüssigen Medium. Es werden farbstarke Pigmente erhalten, wenn man die nach der Synthese anfallenden Rohpigmente mit der 25fachen Menge konzentrierter Schwefelsäure in das Sulfat überführt, dieses isoliert, daraus durch Hydrolyse das Reinprodukt freisetzt, abtrennt und in einem flüssigen Medium mahlt. Pigmente mit hoher Transparenz können nach dieser Arbeitsweise nicht erhalten werden. Die großen Mengen anfallender ca. 70-80%iger Schwefelsäure müssen wieder regeneriert werden. Außerdem werden extrem lange Mahlzeiten benötigt und deshalb nur eine niedrige Raumzeitausbeute erzielt. Aus diesen Gründen ist dieses Verfahren sehr teuer und unwirtschaftlich. Die erhaltenen Pigmente genügen nicht den heutigen Anforderungen.

Die EP-A-0 360 184 beschreibt die Herstellung von Pigmentzubereitungen auf Basis von Anthanthron-Pigmenten durch wäßrige Perlmahlung der Rohpigmente in Gegenwart von Pigmentdispergatoren. An die Mahlung schließt sich ein Lösemittelfinish an. Durch die Verwendung von Pigmentdispergatoren ist ihr technischer Einsatz auf dem Lackgebiet sehr eingeschränkt, da sie in modernen lösemittelfreien Lacken nicht eingesetzt werden können. Außerdem können Pigmente mit hoher Transparenz nach dieser Arbeitsweise nicht hergestellt werden.

Der vorliegenden Erfindung lag die Aufgabe zugrunde, ein umweltfreundliches und kostengünstiges Verfahren zur Herstellung von 4,10-Dibromanthanthron-Pigment mit hoher Farbstärke und gezielt einstellbarer hoher Transparenz oder hoher Deckkraft zur Verfügung zu stellen, das außerdem die Nachteile des Standes der Technik überwindet.

Überraschenderweise wurde gefunden, daß sich 4,10-Dibromanthanthron-Pigment mit hervorragenden coloristischen Eigenschaften, hoher Transparenz und hoher Farbstärke herstellen läßt, wenn man das bei der Synthese grobkristallin anfallende 4,10-Dibromanthanthron-Rohpigment in einem wäßrigen Medium auf einer Rührwerkskugelmühle mit hoher Energiedichte und kleinen Mahlkörpern bis zum Erreichen eines bestimmten optimalen Feinverteilungsgrades der resultierenden Pigmentteilchen naßvermahlt und die erhaltenen Mahlgutsuspensionen in üblicher Weise aufarbeitet, oder direkt, oder im Falle einer Zwischenisolierung nach deren Wiederaufnahme in Wasser einer üblichen Finishbehandlung bei erhöhter Temperatur unterwirft. Für den Fall, daß ein besonders deckendes Pigment gewünscht wird, wird die Finishbehandlung vorzugsweise in einem aromatischen Lösemittel durchgeführt.

Gegenstand der vorliegenden Erfindung ist ein Verfahren zur Herstellung von 4,10-Dibromanthanthron-Pigment, dadurch gekennzeichnet, daß man das in grobkristallinem Zustand vorliegende 4,10-Dibromanthanthron-Rohpigment zunächst in wäßrigem Medium auf einer Rührwerkskugelmühle, die mit einer Leistungsdichte von größer als 2,5 kW pro Liter Mahlraum und einer Rührwerksumfangsgeschwindigkeit von größer als 12 m/s betrieben wird, unter der Einwirkung von Mahlkörpern vom Durchmeser kleiner als 1,0 mm bis zum gewünschten Feinverteilungsgrad naßvermahlt (Mahlgutsuspension) und anschließend das entstandene Pigment isoliert; oder das bei der Naßmahlung entstandene Präpigment in einem wäßrigen Medium, einem wäßrig-organischen Medium oder in einer flüssigen aromatischen Verbindung einer Behandlung bei erhöhter Temperatur unterwirft (Finish) und anschließend das Pigment isoliert.

Je nach Art und physikalischen Eigenschaften des eingesetzten Anthanthron-Rohpigments und dem gewünschten Einsatzzweck wird gebrauchsfähiges Pigment entweder bereits unmittelbar nach der Naßmahlung erhalten, oder es entsteht zunächst ein feinteiliges Präpigment, das einer Finishbehandlung bei erhöhten Temperaturen unterworfen werden muß, um in eine gebrauchsfähige Pigmentform überführt zu werden. Das Präpigment kann in Form der erhaltenen Mahlgutsuspension oder, im Falle einer Zwischenisolierung, nach vorheriger Wiederaufnahme in Wasser, in einem organisch-wäßrigen Medium oder in der flüssigen aromatischen Verbindung dem Finish zugeführt werden. Der Finish wird meist in wäßrigem Medium oder in organisch-wäßrigem Medium durchgeführt, wenn ein möglichst transparentes Pigment gewünscht ist, und in der flüssigen aromatischen Verbindung, wenn ein möglichst deckendes Pigment gewünscht ist. Die Isolierung des Pigments kann in üblicher Weise erfolgen.

Bei dem beanspruchten Verfahren werden Feinverteilung und Finish auf elegante Weise kombiniert.
Für die erfindungsgemäße Herstellung dieses Pigments ist eine hohe Mahlwirkung erforderlich, die durch den Einsatz spezieller Ausführungsformen der Rührwerkskugelmühlen erreicht wird. Für eine Mahlung der gesuchten Effizienz sind z.B. Rührwerkskugelmühlen geeignet, die zum diskontinuierlichen und kontinuierlichen Arbeitsablauf ausgelegt sind, mit zylinderförmigem oder hohlzylinderförmigem Mahlraum in horizontaler oder vertikaler Bauweise, die mit einer spezifischen Leistungsdichte von über 2,5 kW pro Liter Mahlraum betrieben werden können, wobei deren Rührwerksumfangsgeschwindigkeit über 12 m/s beträgt. Durch die bauliche Ausführung wird sichergestellt, daß die hohe Mahlenergie auf das Mahlgut übertragen wird. Dafür geeignete Mühlen sind z.B. in der DE-A-3 716 587 beschrieben. Ist die Mahlintensität der Mühle zu gering, so werden die guten, erfindungsgemäßen Eigenschaften, insbesondere die hohe Transparenz und die hohe Farbstärke, nicht erreicht. Die pro Zeiteinheit vom Rührwerk abgegebene Energie wird als Zerkleinerungsarbeit und als Reibungsenergie in Form von Wärme auf das Mahlgut übertragen. Zur problemlosen Abführung dieser großen Wärmemenge muß durch konstruktive Vorkehrungen das Verhältnis von Mahlraum zu Mahlraumoberfläche (Kühlfläche) möglichst klein gehalten werden. Bei hohen Durchsätzen wird im Kreislauf gemahlen und die Wärme wird überwiegend über das Mahlgut nach außen abgeführt. Als Mahlkörper dienen Kugeln aus Zirkonoxid, Zirkonmischoxid, Aluminiumoxid oder Quarz vom Durchmesser kleiner als 1,0 mm; zweckmäßig werden solche mit einem Durchmesser von 0,2 bis 0,9 mm, vorzugsweise 0,3 bis 0,5 mm, verwendet.

Beim Einsatz von kontinuierlichen Rührwerkskugelmühlen zum Feinverteilen erfolgt die Abtrennung der Mahlkörper vom Mahlgut vorzugsweise durch Zentrifugalabscheidung, so daß die Trennvorrichtungen von den Mahlkörpern praktisch nicht berührt werden, wodurch man Verstopfungen derselben weitgehend verhindern kann. Die Rührwerkskugelmühlen werden hierbei mit hohem Mahlkörperfüllgrad betrieben. Bei den kontinuierlichen Rührwerkskugelmühlen wird der Mahlraum praktisch vollständig mit Mahlkörpern ausgefüllt.

Für das erfindungsgemäße Verfahren werden vorzugsweise die bei der Synthese nach Fiat Final Report 1313 Vol II erhaltenen Rohpigmente eingesetzt, die durch Hydrolyse des 4,10-Dibromanthanthron-Oxoniumsulfats hergestellt wurden.

Zur Ermittlung der geeigneten Mahlbedingungen sind Vorversuche notwendig. Für den physikalischen Zustand des Rohpigments sind die Reinheit, die Kristallgröße und die Kristallgüte ausschlaggebend. Im allgemeinen müssen reine und hochkristalline Rohpigmente länger gemahlen werden als verunreinigte und im Kristallgitter gestörte Rohpigmente.

Die Mahlung wird im wäßrigen Medium durchgeführt, vorzugsweise im alkalischen oder neutralen pH-Bereich, insbesondere bei pH 7 bis 14.
Unter grobkristallinen Rohpigmenten werden solche mit einer mittleren Teilchengröße von mehr als 5 µm verstanden.

Die Pigmentkonzentration im Mahlgut ist abhängig von der Rheologie der Suspension. Sie sollte bei kleiner oder gleich 40 Gew.-% liegen, im allgemeinen 5 bis 35 Gew.-% betragen, vorzugsweise zwischen 10 und 20 Gew.-% sein.

Die Mahldauer ist abhängig von den Feinheitsanforderungen für das jeweilige Anwendungsgebiet. Deshalb liegt die Verweilzeit des Mahlguts in der Rührwerkskugelmühle je nach geforderter Feinheit im allgemeinen zwischen 5 und 60 Minuten. Sie beläuft sich normalerweise auf eine Dauer von 5 bis 45 Minuten, vorzugsweise 5 bis 30 Minuten.

Die Mahlung wird bei Temperaturen im Bereich von 0 bis 100°C, zweckmäßig bei einer Temperatur zwischen 10 und 60°C, vorzugsweise bei 20 bis 50°C, durchgeführt.

Das Mahlgut kann außer der flüssigen Phase und dem Rohpigment noch Additive wie z.B. kationische, anionische oder nichtionische oberflächenaktive Mittel und/oder Entschäumer und andere Zuschlagstoffe enthalten. Die Zugabe dieser Additive kann vor, während oder nach der Mahlung oder nach dem Finish auf einmal oder in mehreren Portionen vorgenommen werden. Der geeignetste Zeitpunkt muß zuvor durch orientierende Versuche ermittelt werden.

Liegen nach der Mahlung bereits feinteilige Pigmente in der Mahlgutsuspension vor, so werden die Pigmente direkt isoliert. Liegen nach der Mahlung feinteilige Präpigmente in der Mahlgutsuspension vor, so werden die Präpigmente, gegebenenfalls nach Zugabe der oben erwähnten Additive, der thermischen Behandlung (Finish) unterzogen.

Die thermische Behandlung wird gegebenenfalls in Gegenwart von organischen Lösemitteln, beispielsweise C₁-C₈-Alkanolen oder alicyclischen Alkoholen wie z.B. Methanol, Ethanol, n- oder Isopropanol, n- oder Isobutanol, tert. Butanol, Pentanole, Hexanole, Cyclohexanol; C₁-C₅-Dialkyl- oder cyclischen Ketonen wie z.B. Aceton, Diethylketon, Methylisobutylketon, Methylethylketon oder Cyclohexanon; Ethern und Glykolethern wie z.B. der Monomethyl- oder Monoethylether des Ethylen- und Propylenglykols, Butylglykol, Ethyldiglykol oder Methoxybutanol; aromatischen Kohlenwasserstoffen wie z.B. Toluol, Xylole, Cumol oder Ethylbenzol, aromatischen Chlorkohlenwasserstoffen wie z.B. Chlorbenzol, o-Dichlorbenzol, 1,2,4-Trichlorbenzol oder Brombenzol; substituierten Aromaten wie z.B. Benzoesäure, Nitrobenzol oder Phenol; aliphatischen Carbonsäureamiden wie z.B. Formamid oder Dimethylformamid; cyclischen Carbonsäureamiden, wie z.B. N-Methylpyrrolidon; Carbonsäure-C₁-C₄- alkylestern, wie z.B. Ameisensäurebutylester, Essigsäureethylester oder Propionsäurepropylester; Carbonsäure-C₁-C₄-glykolestern, Phthalsäure- und Benzoesäure-C₁-C₄-alkylester wie z.B. Benzoesäureethylester; heterocyclischen Basen wie z.B. Pyridin, Morpholin oder Picolin, innerhalb eines Zeitraums von vorzugsweise 1 bis 6 Stunden bei 40 bis 180°C, vorzugsweise 60 bis 120°C, gegebenenfalls unter erhöhtem Druck, durchgeführt. Die dem wäßrigen Medium gegebenenfalls zugefügte Lösemittelmenge kann in weiten Grenzen schwanken. Zweckmäßig ist die bis zu 5-fache Gewichtsmenge an Lösemittel, bezogen auf das Gewicht des Pigments.

Bevorzugt ist jedoch ein rein wäßriger Finish, wenn eine transparente Pigmentform gewünscht ist. Bevorzugt wird die nach der Mahlung erhaltene Präpigmentsuspension ohne Zwischenisolierung eingesetzt. Je nach Verwendungszweck kann man die nach dem erfindungsgemäßen Verfahren anfallenden Präpigmente in eine deckendere oder transparentere Form überführen, was über die Konzentration, die Temperatur, den pH-Wert und die Dauer der Behandlung gesteuert werden kann. Wenn eine möglichst deckende Pigmentform gewünscht wird, so ist eine Finishbehandlung in einem oder mehreren der vorstehend genannten aromatischen Kohlenwasserstoffe, aromatischen Chlorkohlenwasserstoffe oder substituierten Aromaten besonders bevorzugt.

Wenn eine möglichst große Farbtiefe, sowohl für deckende als auch für transparente Pigmentformen, gewünscht wird, so ist es besonders vorteilhaft, nach der Naßmahlung eine oxidative Nachbehandlung mit einem Peroxodisulfat durchzuführen. Als Peroxodisulfat kommen Natriumperoxodisulfat, Kaliumperoxodisulfat oder Ammoniumperoxodisulfat, bevorzugt in wäßriger Lösung in Betracht. Die oxidative Nachbehandlung geschieht zweckmäßigerweise durch Erhitzen der Mahlgutsuspension in Gegenwart von Peroxodisulfat auf Temperaturen von 50 bis 120°C, vorzugsweise 60 bis 100°C, und bei einem pH-Wert zwischen 8 und 14. Insbesondere bei Temperaturen über 100°C ist für die Umsetzung ein Druckgefäß zweckmäßig.

Die oxidative Nachbehandlung kann vor oder im Anschluß an die Finishbehandlung durchgeführt werden. Bevor man das Pigment isoliert, ist es zweckmäßig, den pH-Wert der Mahlgutsuspension mit einer Mineralsäure, bevorzugt mit verdünnter Schwefelsäure, auf pH 6 bis 7 einzustellen.

Die Herstellung des Anthanthron-Pigments nach dem erfindungsgemäßen Verfahren hat sich als besonders wirtschaftlich sowie umweltfreundlich erwiesen, weil bei der Feinverteilung der Rohpigmente durch Naßmahlung keine Verschmutzung der Luft aufgrund von Staubentwicklung auftritt. Außerdem werden keine oder nur geringe Mengen an Chemikalien und Lösemitteln eingesetzt, welche anschließend weiterverarbeitet oder wieder vollständig regeneriert werden können. Somit treten keine Entsorgungsprobleme auf.

Es war überraschend und nach dem Stand der Technik nicht vorhersehbar, daß durch Naßmahlung in einem einzigen Mahlgang und ohne Pigmentdispergatoren die Feinverteilung des grobkristallinen Anthanthron-Rohpigments gelingt.

Das erfindungsgemäß hergestellte Pigment eignet sich zum Pigmentieren von hochmolekularen natürlichen oder synthetischen organischen Materialien, wie beispielsweise Celluloseether und -ester, wie Ethylcellulose, Nitrocellulose, Celluloseacetat, Cellulosebutyrat, natürliche Harze oder Kunstharze, wie Polymerisationsharze oder Kondensationsharze, z.B. Aminoplaste, insbesondere Harnstoff- und Melamin-Formaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen. Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, das erfindungsgemäß zu verwendende Pigment als Verschnitt oder in Form von Präparationen oder Dispersionen einzusetzen. Bezogen auf das zu pigmentierende hochmolekulare organische Material, setzt man das erfindungsgemäß hergestellte Pigment in einer Menge von vorzugsweise 0,1 bis 10 Gew.-% ein.

Das nach dem erfindungsgemäßen Verfahren hergestellte Pigment eignet sich für die Anwendung in allen gängigen lösemittelhaltigen und lösemittelfreien Lacksystemen. Es eignet sich insbesondere für den Einsatz in Metallic-Lacken, wo auf hohe Transparenz und hohe Echtheiten Wert gelegt wird. Nach der Einarbeitung werden transparente, farbstarke, reine und glänzende Lackierungen mit sehr guter Wetterechtheit erhalten.

Zur Beurteilung der Eigenschaften des erfindungsgemäß hergestellten Pigments in Lacksystemen wurde aus der Vielzahl der bekannten Systeme ein Alkyd-Melaminharz-Lack (AM) auf Basis eines mittelöligen Alkydharzes und eines butanolveretherten Melaminharzes, ein Zweikomponentenlack auf Basis eines mit Isocyanat vernetzbaren Acrylharzes (ICA), ein Polyesterlack auf Basis von Celluloseacetobutyrat und eines Melaminharzes (PE), sowie ein wäßriger Lack auf Polyurethanbasis (PUR) ausgewählt.
In den nachfolgenden Beispielen wird darauf unter der Bezeichnung AM-, ICA-, PE- oder PUR-Lack verwiesen.

In den nachstehenden Beispielen bedeuten Teile Gewichtsteile und Prozente Gewichtsprozente.

### Beispiel 1:

In eine Rührwerkskugelmühle (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension, bestehend aus 89,7 Teilen Wasser, 0,3 Teilen Natriumhydroxid 98%ig und 10 Teilen grobkristallinem 4,10-Dibromanthanthron-Rohpigment (hergestellt gemäß Fiat Final Report 1313 Vol II) eindosiert und mit einer Rührwerksumfangsgeschwindigkeit von 15,6 m/s sowie einer spezifischen Leistungsdichte von 3,1 kW pro Liter Mahlraum 15 Minuten lang bei 25°C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser gewaschen und bei 80°C getrocknet. Man erhält 9,67 Teile Pigment, das im AM-Lack, ICA-Lack, PE-Lack und PUR-Lack transparente und farbstarke Lackierungen liefert.

### Beispiel 1 a: (Vergleichsbeispiel)

Wird das oben eingesetzte Rohpigment mit den in der EP-A-0 360 184 Beispiel 8 beschriebenen Mahlbedingungen, ohne den Zusatz des Pigmentdispergators, auf einer Perlmühle mit Scheibenrührwerk, Zirkonmischoxidperlen vom Durchmesser 0,6-1 mm und mit der Rührwerksumfangsgeschwindigkeit von 10,2 m/s (2800U/Min) 120 Minuten lang gemahlen und danach aufgearbeitet, so erhält man ein Pigment, das im AM-Lack deutlich deckender und merklich farbschwächer ist als das erfindungsgemäß hergestellte Pigment. Auf Grund der zu geringen Transparenz ist dieses Pigment nicht für die Herstellung von Metallic-Lacken geeignet.

### Beispiel 2:

In eine Rührwerkskugelmühle (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension, bestehend aus 89,7 Teilen Wasser, 0,3 Teilen Natriumhydroxid 98%ig und 10 Teilen grobkristallinem 4,10-Dibromanthanthron-Rohpigment (hergestellt gemäß Fiat Final Report 1313 Vol II), eindosiert und mit einer Rührwerksumfangsgeschwindigkeit von 15,6 m/s sowie einer spezifischen Leistungsdichte von 3,1 kW pro Liter Mahlraum 5 Minuten lang bei 25°C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser gewaschen und bei 80°C getrocknet. Man erhält 9,76 Teile Pigment, das im AM-Lack deutlich deckendere Lackierungen liefert als das nach Beispiel 1 hergestellte Pigment.

### Beispiel 3:

In eine Rührwerkskugelmühle (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension, bestehend aus 89,7 Teilen Wasser, 0,3 Teilen Natriumhydroxid 98%ig und 10 Teilen grobkristallinem 4,10-Dibromanthanthron-Rohpigment (hergestellt gemäß Fiat Final Report 1313 Vol II), eindosiert und mit einer Rührwerksumfangsgeschwindigkeit von 15,6 m/s sowie einer spezifischen Leistungsdichte von 3,1 kW pro Liter Mahlraum 30 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser gewaschen und bei 80°C getrocknet. Man erhält 9,70 Teile Pigment, das im AM-Lack deutlich transparentere Lackierungen liefert als das nach Beispiel 1 hergestellte Pigment. Der Aschegehalt im Pigment beträgt 0,42%.

### Beispiel 4:

In eine Rührwerkskugelmühle (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension, bestehend aus 84,7 Teilen Wasser, 0,3 Teilen Natriumhydroxid 98%ig und 15 Teilen grobkristallinem 4,10-Dibromanthanthron-Rohpigment (hergestellt gemäß Fiat Final Report 1313 Vol II), eindosiert und mit einer Rührwerksumfangsgeschwindigkeit von 15,6 m/s sowie einer spezifischen Leistungsdichte von 3,1 kW pro Liter Mahlraum 15 Minuten lang bei 25°C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser gewaschen und bei 80°C getrocknet. Man erhält 14,7 Teile Pigment, das im AM-Lack, ICA-Lack, PE-Lack und PUR-Lack transparente und farbstarke Lackierungen liefert. Der Aschegehalt im Pigment beträgt 0,24%.

### Beispiel 5:

In eine Rührwerkskugelmühle (Hersteller: Draiswerke GmbH, Mannheim), die mit 523 Teilen Zirkonoxidperlen vom Durchmesser 0,3-0,4 mm als Mahlkörper gefüllt ist, wird eine Suspension, bestehend aus 89 Teilen Wasser, 1 Teil Natriumhydroxid 98%ig und 10 Teilen grobkristallinem 4,10-Dibromanthanthron-Rohpigment (hergestellt gemäß Fiat Final Report 1313 Vol II), eindosiert und mit einer Rührwerksumfangsgeschwindigkeit von 15,6 m/s sowie einer spezifischen Leistungsdichte von 3,1 kW pro Liter Mahlraum 15 Minuten lang bei 25°C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser gewaschen und bei 80°C getrocknet. Man erhält 9,70 Teile Pigment, das im AM-Lack transparente und farbstarke Lackierungen liefert.

### Beispiel 6:

In eine Rührwerkskugelmühle (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension, bestehend aus 89,7 Teilen Wasser, 0,3 Teilen Natriumhydroxid 98%ig und 10 Teilen grobkristallinem 4,10-Dibromanthanthron-Rohpigment (hergestellt gemäß Fiat Final Report 1313 Vol II), eindosiert und mit einer Rührwerksumfangsgeschwindigkeit von 15,6 m/s sowie einer spezifischen Leistungsdichte von 3,1 kW pro Liter Mahlraum 15 Minuten lang bei 25°C gemahlen. Anschließend wird die Mahlgutsuspension von den Mahlkörpern abgesiebt.
Zur Durchführung des Finishs werden 50 Teile der obigen Mahlgutsuspension mit 0,17 Teilen Natriumhydroxid 98%ig versetzt, zum Sieden erhitzt und 3 Stunden bei Siedetemperatur gerührt. Nach dem Abkühlen auf 60°C wird das Pigment abgesaugt, mit Wasser gewaschen und bei 80°C getrocknet.
Man erhält 4,4 Teile Pigment, das im AM-Lack, ICA-Lack, PE-Lack und PUR-Lack transparente und farbstarke Lackierungen liefert.

### Beispiel 7:

In eine Rührwerkskugelmühle (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension, bestehend aus 89,7 Teilen Wasser, 0,3 Teilen Natriumhydroxid 98%ig und 10 Teilen grobkristallinem 4,10-Dibromanthanthron-Rohpigment (hergestellt gemäß Fiat Final Report 1313 Vol II), eindosiert und mit einer Rührwerksumfangsgeschwindigkeit von 15,6 m/s sowie einer spezifischen Leistungsdichte von 3,1 kW pro Liter Mahlraum 15 Minuten lang bei 25°C gemahlen. Anschließend wird die Mahlgutsuspension von den Mahlkörpern abgesiebt, abfiltriert und neutral gewaschen.
Zur Durchführung des Finishs werden 20,2 Teile des obigen Filterrückstands in eine Lösung aus 89,8 Teilen Wasser und 0,65 Teilen Natriumhydroxid 98%ig eingetragen und 3 Stunden bei 50-60°C gerührt. Danach wird das Pigment abgesaugt, mit Wasser gewaschen und bei 50°C getrocknet.
Man erhält 9,9 Teile Pigment, das im AM-Lack transparente und farbstarke Lackierungen liefert.

### Beispiel 8:

In eine Rührwerkskugelmühle (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension, bestehend aus 89,7 Teilen Wasser, 0,3 Teilen Natriumhydroxid 98%ig und 10 Teilen grobkristallinem 4,10-Dibromanthanthron-Rohpigment (hergestellt gemäß Fiat Final Report 1313 Vol II), eindosiert und mit einer Rührwerksumfangsgeschwindigkeit von 15,6 m/s sowie einer spezifischen Leistungsdichte von 3,1 kW pro Liter Mahlraum 15 Minuten lang bei 25°C gemahlen. Anschließend wird die Mahlgutsuspension von den Mahlkörpern abgesiebt, abfiltriert und neutral gewaschen.
Zur Durchführung des Finishs werden 23 Teile des obigen Filterrückstands in eine Lösung aus 74 Teilen Wasser und 0,63 Teilen Natriumhydroxid 98%ig eingetragen und 3 Stunden bei 100°C gerührt. Danach wird das Pigment abgesaugt, mit Wasser gewaschen und bei 80°C getrocknet.
Man erhält 9,8 Teile Pigment, das im AM-Lack, ICA-Lack, PE-Lack und PUR-Lack transparente und farbstarke Lackierungen liefert. Die Wetterechtheit ist ausgezeichnet.

### Beispiel 9:

In eine Rührwerkskugelmühle (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension, bestehend aus 89,7 Teilen Wasser, 0,3 Teilen Natriumhydroxid 98%ig und 10 Teilen grobkristallinem 4,10-Dibromanthanthron-Rohpigment (hergestellt gemäß Fiat Final Report 1313 Vol II), eindosiert und mit einer Rührwerksumfangsgeschwindigkeit von 15,6 m/s sowie einer spezifischen Leistungsdichte von 3,1 kW pro Liter Mahlraum 15 Minuten lang bei 25°C gemahlen. Anschließend wird die Mahlgutsuspension von den Mahlkörpern abgesiebt, abfiltriert und neutral gewaschen.
Zur Durchführung des Finishs werden 20,2 Teile des obigen Filterrückstands in eine Lösung aus 89,8 Teilen Wasser, 0,2 Teilen eines Alkylphenolpolyglykolethersulfats und 0,4 Teilen Ameisensäure 98%ig eingetragen und 3 Stunden bei Siedetemperatur gerührt. Nach dem Abkühlen auf 60°C wird das Pigment abgesaugt, mit Wasser gewaschen und bei 80°C getrocknet.
Man erhält 9,8 Teile Pigment, das im AM-Lack transparente und farbstarke Lackierungen liefert.

### Beispiel 10:

In eine Rührwerkskugelmühle (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension, bestehend aus 89,7 Teilen Wasser, 0,3 Teilen Natriumhydroxid 98%ig und 10 Teilen grobkristallinem 4,10-Dibromanthanthron-Rohpigment (hergestellt gemäß Fiat Final Report 1313 Vol II), eindosiert und mit einer Rührwerksumfangsgeschwindigkeit von 15,6 m/s sowie einer spezifischen Leistungsdichte von 3,1 kW pro Liter Mahlraum 15 Minuten lang bei 25°C gemahlen. Anschließend wird die Mahlgutsuspension von den Mahlkörpern abgesiebt, abfiltriert und neutral gewaschen.
Zur Durchführung des Finishs werden 20,2 Teile des obigen Filterrückstands in 189,8 Teile Wasser eingetragen, mit 0,2 Teilen Salzsäure 5%ig auf pH 4-5 gestellt, auf 155°C erhitzt und 10 Stunden bei 155°C gerührt. Nach dem Abkühlen auf 60°C wird das Pigment abgesaugt, mit Wasser gewaschen und bei 80°C getrocknet.
Man erhält 9,8 Teile Pigment, das im AM-Lack deckende und farbstarke Lackierungen liefert.

### Beispiel 11:

In eine Rührwerkskugelmühle (Hersteller: Draiswerke GmbH, Mannheim), die mit 336 Teilen Zirkonmischoxidperlen vom Durchmesser 0,3-0,4 mm als Mahlkörper gefüllt ist, wird eine Suspension, bestehend aus 89,7 Teilen Wasser, 0,3 Teilen Natriumhydroxid 98%ig und 10 Teilen grobkristallinem 4,10-Dibromanthanthron-Rohpigment (hergestellt gemäß Fiat Final Report 1313 Vol II), eindosiert und mit einer Rührwerksumfangsgeschwindigkeit von 15,6 m/s sowie einer spezifischen Leistungsdichte von 3,1 kW pro Liter Mahlraum 5 Minuten lang bei 25°C gemahlen. Anschließend wird die Mahlgutsuspension von den Mahlkörpern abgesiebt, abfiltriert und neutral gewaschen.
Zur Durchführung des Finishs werden 22 Teile des obigen Filterrückstands in eine Lösung aus 44 Teilen Wasser und 0,63 Teilen Natriumhydroxid 98%ig eingetragen, 44 Teile n-Butanol zugegeben, auf 90°C erhitzt und 3 Stunden bei 90°C gerührt. Danach wird das n-Butanol bis 100°C am Übergang abdestilliert. Anschließend wird auf 60°C abgekühlt, das Pigment abgesaugt, mit Wasser gewaschen und bei 80°C getrocknet.
Man erhält 9,5 Teile Pigment, das im AM-Lack sehr deckende Lackierungen liefert.

### Beispiel 12:

In einer Rührwerkskugelmühle (Hersteller: Draiswerke GmbH, Mannheim), die mit Zirkonmischoxidperlen vom Durchmesser 0,3 bis 0,4 mm als Mahlkörper zu 90 Vol-% gefüllt ist, wird eine Suspension, bestehend aus 89,7 Teilen Wasser, 0,3 Teilen Natriumhydroxid 98 %ig und 10 Teilen grobkristallinem 4,10-Dibromanthanthronrohpigment (hergestellt gemäß Fiat Final Report 1313 Vol II) mit einer Rührwerksumfangsgeschwindigkeit von 15,6 m/s sowie einer spezifischen Leistungsdichte von 3,1 kW pro Liter Mahlraum 120 Minuten lang bei 25°C im Kreislauf gemahlen.
Zur Durchführung des Finishs werden 100 Teile der obigen Mahlgutsuspension in einem Rührgefäß vorgelegt und auf 90 bis 95°C erhitzt. Anschließend wird eine Lösung aus 7,5 Teilen Natriumperoxodisulfat und 35 Teilen Wasser zugegeben und 1 Stunde bei 90 bis 95°C gerührt. Danach werden 30 Teile Xylol (Isomerengemisch) zugegeben, 5 Stunden zum Sieden erhitzt und anschließend das Xylol mit Wasserdampf bis 100°C am Übergang abdestilliert. Nach dem Abkühlen auf 60°C werden 55 Teile 10 %ige Schwefelsäure zugegeben und der pH-Wert auf pH 6,5 bis 7 eingestellt. Es wird 1 Stunde bei 60°C gerührt und danach das Pigment abgesaugt, sulfatfrei gewaschen und bei 80°C getrocknet.
Man erhält 9,95 Teile Pigment, das im AM-Lack sehr deckende und farbtiefe Lackierungen liefert.
Wird auf die Natriumperoxodisulfatbehandlung verzichtet, so werden Pigmente erhalten, die Lackierungen mit geringerer Farbtiefe liefern.

## Patentansprüche

1. Verfahren zur Herstellung von 4,10-Dibromanthanthron-Pigment, dadurch gekennzeichnet, daß man das in grobkristallinem Zustand vorliegende 4,10-Dibromanthanthron-Rohpigment zunächst in wäßrigem Medium auf einer Rührwerkskugelmühle, die mit einer Leistungsdichte von größer als 2,5 kW pro Liter Mahlraum und einer Rührwerksumfangsgeschwindigkeit von größer als 12 m/s betrieben wird, unter der Einwirkung von Mahlkörpern vom Durchmesser kleiner als 1,0 mm bis zum gewünschten Feinverteilungsgrad naßvermahlt und anschließend das entstandene Pigment in üblicher Weise isoliert; oder das bei der Naßmahlung entstandene Präpigment in einem wäßrigen Medium, in einem wäßrigorganischen Medium oder in einer flüssigen aromatischen Verbindung einer Behandlung bei erhöhter Temperatur unterwirft und anschließend das Pigment isoliert.

2. Verfahren gemäß Anspruch 1, dadurch gekennzeichnet, daß die Pigmentkonzentration im Mahlgut gleich oder kleiner als 40 Gew.-%, vorzugsweise 5 bis 35 Gew.-%, insbesondere 10 bis 20 Gew.-%, ist.

3. Verfahren gemäß Anspruch 1 oder 2, dadurch gekennzeichnet, daß man Mahlkörper vom Durchmesser 0,2 bis 0,9 mm, vorzugsweise 0,3 bis 0,5 mm, einsetzt.

4. Verfahren gemäß einem oder mehreren der Ansprüche 1 bis 3, dadurch gekennzeichnet, daß man die Naßmahlung bei pH-Werten im neutralen oder alkalischen Bereich, vorzugsweise bei pH 7 bis 14, durchführt.

5. Verfahren gemäß einem oder mehreren der Ansprüche 1 bis 4, dadurch gekennzeichnet, daß man die Naßmahlung bei einer Temperatur zwischen 0 und 100°C, vorzugsweise 10 und 60°C, insbesondere 20 und 50°C, durchführt.

6. Verfahren nach mindestens einem der Ansprüche 1 bis 5, dadurch gekennzeichnet, daß man den Finish bei Temperaturen von 40 bis 180°C, vorzugsweise 60 bis 120°C, durchführt.

7. Verfahren nach mindestens einem der Ansprüche 1 bis 6, dadurch gekennzeichnet, daß man den Finish in Wasser durchführt.

8. Verfahren nach mindestens einem der Ansprüche 1 bis 6, dadurch gekennzeichnet, daß man den Finish in einem aromatischen Kohlenwasserstoff, einem aromatischen Chlorkohlenwasserstoff oder einem substituierten Aromaten, vorzugsweise in Toluol, Xylol, Cumol, Ethylbenzol, oder einer Mischung davon durchführt.

9. Verfahren nach mindestens einem der Ansprüche 1 bis 8, dadurch gekennzeichnet, daß man nach der Naßmahlung eine oxidative Nachbehandlung mit einem Peroxodisulfat, vorzugsweise Natriumperoxodisulfat, Kaliumperoxodisulfat oder Ammoniumperoxodisulfat, durchführt.

10. Verfahren nach Anspruch 9, dadurch gekennzeichnet, daß man die oxidative Nachbehandlung bei Temperaturen von 50 bis 120°C, vorzugsweise 60 bis 100°C, und bei einem pH-Wert zwischen 8 und 14 durchführt.

11. Verwendung eines nach einem oder mehreren der Ansprüche 1 bis 7, 9 und 10 hergestellten 4,10-Dibromanthanthron-Pigments als Farbmittel zum Pigmentieren von Lacken, Druckfarben und Kunststoffen, insbesondere Metallic-Lacken.

## Claims

1. A process for the preparation of 4,10-dibromoanthanthrone pigment, which comprises first subjecting the crude 4,10-dibromoanthanthrone pigment, which is in the coarsely crystalline state, to wet milling in an aqueous medium in a stirred ball mill which is operated at a power density of more than 2.5 kW per liter of milling space and at a peripheral stirrer speed of more than 12 m/s under the action of grinding media with a diameter of less than 1.0 mm, until the desired degree of fine division is reached, and then isolating the resulting pigment in a conventional manner; or subjecting the prepigment obtained in the wet milling to a treatment at elevated temperature in an aqueous medium, an aqueous-organic medium or a liquid aromatic compound, and then isolating the pigment.

2. The process as claimed in claim 1, wherein the pigment concentration in the millbase is less than or equal to 40 % by weight, preferably from 5 to 35 % by weight, in particular from 10 to 20 % by weight.

3. The process as claimed in claim 1 or 2, wherein grinding media with a diameter of from 0.2 to 0.9 mm, preferably from 0.3 to 0.5 mm, are employed.

4. The process as claimed in one or more of claims 1 to 3, wherein the wet milling is carried out at a pH in the neutral or alkaline range, preferably at a pH of from 7 to 14.

5. The process as claimed in one or more of claims 1 to 4, wherein the wet milling is carried out at a temperature of between 0 and 100°C, preferably between 10 and 60°C and in particular between 20 and 50°C.

6. The process as claimed in at least one of claims 1 to 5, wherein the finish is carried out at temperatures of from 40 to 180°C, preferably from 60 to 120°C.

7. The process as claimed in at least one of claims 1 to 6, wherein the finish is carried out in water.

8. The process as claimed in at least one of claims 1 to 6, wherein the finish is carried out in an aromatic hydrocarbon, an aromatic chlorinated hydrocarbon or a substituted aromatic compound, preferably in toluene, xylene, cumene, ethylbenzene, or a mixture thereof.

9. The process as claimed in at least one of claims 1 to 8, wherein the wet milling is followed by an oxidative aftertreatment with a peroxodisulfate, preferably sodium peroxodisulfate, potassium peroxodisulfate or ammonium peroxodisulfate.

10. The process as claimed in claim 9, wherein the oxidative aftertreatment is carried out at temperatures of from 50 to 120°C, preferably from 60 to 100°C, and at a pH of between 8 and 14.

11. The use of a 4,10-dibromoanthanthrone pigment prepared as claimed in one or more of claims 1 to 7, 9 and 10 as colorant for the pigmentation of coating materials, printing inks and plastics, especially metallic paints.

## Revendications

1. Procédé pour la préparation de pigments de 4,10-dibromoanthantrone, caractérisé en ce que d'abord l'on broie par voie humide le pigment brut de 4,10-dibromo-anthantrone à l'état de cristaux grossiers dans un milieu aqueux dans un broyeur-agitateur à boulets, avec une puissance volumique supérieure à 2,5 kW par litre d'espace de broyage et avec une vitesse périphérique de l'agitateur supérieure à 12 m/seconde, sous l'action des corps broyants d'un diamètre inférieur à 1,0 mm jusqu'au degré de division fine voulu et ensuite, on isole le pigment formé de façon usuelle ; ou l'on traite le prépigment formé au cours du broyage par voie humide dans un milieu aqueux, dans un milieu aqueux-organique ou dans un composé aromatique liquide, à température élevée, et ensuite on isole le pigment.

2. Procédé selon la revendication 1, caractérisé en ce que la concentration en pigment dans la matière broyée est égale ou inférieure à 40 % en poids, de préférence de 5 à 35 % en poids, plus particulièrement de 10 à 20 % en poids.

3. Procédé selon la revendication 1 ou 2, caractérisé en ce que l'on utilise des corps broyants d'un diamètre de 0,2 à 0,9 mm, de préférence de 0,3 à 0,5 mm.

4. Procédé selon une ou plusieurs des revendications 1 à 3, caractérisé en ce que l'on met en oeuvre le broyage par voie humide, à un pH dans le domaine neutre ou alcalin, de préférence à un pH de 7 à 14.

5. Procédé selon une ou plusieurs des revendications 1 à 4, caractérisé en ce que l'on met en oeuvre le broyage par voie humide à une température comprise entre 0 et 100 °C, de préférence de 10 à 60 °C, plus particulièrement de 20 à 50 °C.

6. Procédé selon au moins l'une des revendications 1 à 5, caractérisé en ce que l'on met en oeuvre la finition à une température de 40 à 180 °C, de préférence de 60 à 120 °C.

7. Procédé selon au moins l'une des revendications 1 à 6, caractérisé en ce que l'on met en oeuvre la finition dans l'eau.

8. Procédé selon au moins l'une des revendications 1 à 6, caractérisé en ce que l'on met en oeuvre la finition dans un hydrocarbure aromatique, un hydrocarbure aromatique chloré ou un aromatique substitué, de préférence dans du toluène, du xylène, du cumène, dans de l'éthylbenzène ou un mélange de ces solvants.

9. Procédé selon au moins l'une des revendications 1 à 8, caractérisé en ce que, après le broyage par voie humide, on met en oeuvre un post-traitement oxydatif avec un peroxodisulfate, de préférence avec le peroxo-disulfate de sodium, le peroxodisulfate de potassium ou le peroxodisulfate d'ammonium.

10. Procédé selon la revendication 9, caractérisé en ce que l'on met en oeuvre le post-traitement oxydatif à une température de 50 à 120 °C, de préférence de 60 à 100 °C, et à un pH compris entre 8 et 14.

11. Utilisation d'un pigment de 4,10-dibromo-anthantrone préparé selon une ou plusieurs des revendications 1 à 7, 9 et 10, en tant que colorant pour la pigmentation de vernis, d'encres d'imprimerie et de matières plastiques, plus particulièrement de vernis Metallic.
